# EUROPEAN PATENT SPECIFICATION

(11) **EP 1 675 270 B1**
(45) Date of publication and mention of the grant of the patent: **15.04.2009**
(21) Application number: 05028114.6
(22) Date of filing: 21.12.2005
(51) Int. Cl.: H04B 1/10

(54) **Noise removing apparatus for wireless transceiver**
Vorrichtung zur Rauschunterdrückung für einen drahtlosen Empfänger
Dispositif d'élimination de bruits pour un récepteur sans fil

(30) Priority: 21.12.2004 KR 2004109939
(43) Date of publication of application: 28.06.2006
(73) Proprietor: Samsung Electronics Co., Ltd., Suwon-si, Gyeonggi-Do (KR)
(72) Inventor: Kim, Seung-Bum, Samsung Electronics Co., Ltd., Suwon-si, Gyeonggi-do (KR)
(74) Representative: Grünecker, Kinkeldey, Stockmair & Schwanhäusser Anwaltssozietät

(56) References cited:
- EP-A- 1 052 772
- GB-A- 2 238 193
- US-A- 5 267 234
- US-A- 6 023 609

## Description

The present invention relates to a wireless transceiver, and more particularly to an apparatus and an operating method for removing noise generated by a transmission signal introduced into a receiver in a wireless transceiver.

In general, a cross modulation (CM) phenomenon refers to intermodulation occurring in the carrier of an actually-received signal caused by an undesired signal.

In the case of a wireless transceiver, a part of a transmission signal introduced into a receiver causes the intermodulation with an actually-received signal. The noise caused by such intermodulation is called CM noise, which degrades the signal reception sensitivity.

As described above, the CM noise is a nonlinear component generated when a transmission signal, having been introduced into the receiver, passes through an active device, and is generated mainly by a low noise amplifier (LNA) and a mixer.

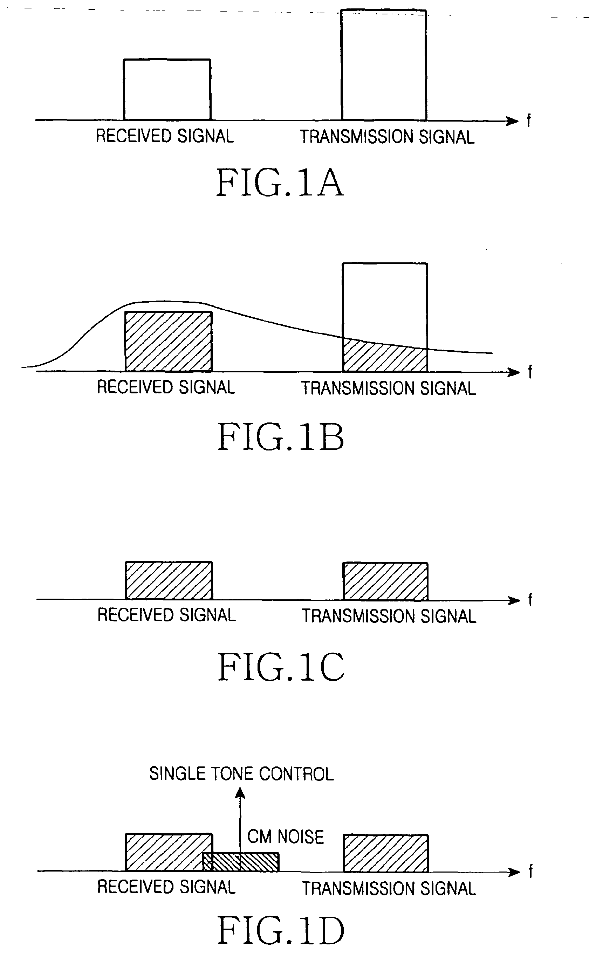

FIGs. 1A to 1D are views illustrating CM noise generation steps in a conventional wireless transceiver. As shown in FIG. 1A, a reception signal includes a transmission signal as well as an actually-received signal, and CM noise is generated while this transmission signal passes through an active device of a receiver, such as a low noise amplifier.

Therefore, the prior art removes the transmission signal included in the reception signal by passing only the actually-received signal as shown in FIG. 1B by means of a band pass filter (BPF) or duplexer.

However, although the transmission signal is removed as described above, a part of the transmission signal remains in the reception signal as shown in FIG. 1C. The transmission signal portion still-remaining in the reception signal is modulated with an in-band single tone jammer as shown in FIG. 1D, while passing through a low noise amplifier or mixer, thereby causing CM noise. Such CM noise exerts a bad influence upon a frequency band for the reception signal, thereby degrading the signal reception performance. Therefore, it is necessary to sufficiently remove the transmission signal in order to prevent the generation of a CM noise.

Recently, a scheme using a duplexer having excellent performance in separating the transmission signal from the reception signal and a scheme using a plurality of band pass filters has been used to sufficiently remove the transmission signal included in a reception signal. However, in the case of a sub-receiver such as a diversity receiver, since it is not required to separate a transmission signal from a reception signal, the transmission signal removing scheme using a duplexer cannot be employed. Also, the scheme of using a plurality of band pass filters results in a high cost, and enlarges the volume of the wireless transceiver due to the number of installed band pass filters.

US 6 023 609 discloses a separating device for transmitting filter and receiving filter. The elimination band of the receiving filter is adjusted so as to coincide with the transmitting frequency of the communication channel by controlling voltages of variable capacity diodes. The document further discloses connecting variable capacity diodes in series dielectric resonant element.

Accordingly, the present invention has been made to solve the above-mentioned problems occurring in the prior art.

It is the object of the present invention to provide a noise removing apparatus which can sufficiently remove a signal having a transmission frequency band included in a reception signal, by using a band stop filter to remove a signal having a predetermined frequency band, while ensuring a low cost and occupying a small area.

This object is solved by the subject matter of the independent claims.

Preferred embodiments are defined in the dependent claims.

An aspect of the present invention is to provide a noise removing apparatus which can sufficiently remove a signal having a transmission frequency band included in a reception signal, by installing a band stop filter in a receiver in such a manner that an attenuation pole of the band stop filter may precisely be the same as a transmission frequency band. To accomplish these objects, in accordance with one aspect of the present invention, there is provided a noise removing apparatus for a wireless transceiver, the apparatus including a transmission-frequency control voltage generation unit for generating a transmission frequency control voltage to control a transmission frequency, which is used to convert a baseband signal to be transmitted into a signal having a transmission frequency band; and a band stop filter for preventing a transmission frequency band signal included in a received signal from passing therethrough, by controlling an attenuation pole to accord with the transmission frequency band, based on the transmission frequency control voltage.

In accordance with another aspect of the present invention, there is provided a noise removing apparatus for a wireless transceiver, which includes a transmitter for mixing a baseband transmission signal to be transmitted with a transmission frequency so as to convert the baseband transmission signal into a signal having a transmission frequency band, a first receiver for converting a received signal of a reception frequency band into a first baseband received signal, and a second receiver for converting a diversity signal of the reception frequency band into a second baseband received signal, the apparatus including a transmission-frequency control voltage generation unit for generating a control voltage to control a frequency of a voltage-controlled oscillator, which provides the transmission frequency for the transmitter, and a band stop filter connected between an antenna and the second receiver, so as to control an attenuation pole to accord with the transmission frequency band based on the transmission frequency control voltage, thereby preventing a transmission frequency band signal included in the received signal from passing therethrough.

A further aspect of the present invention is to provide a method for operating the above-defined noise removing apparatus.

The present invention will be more apparent from the following detailed description taken in conjunction with the accompanying drawings, in which:
FIGs. 1A to 1D are views illustrating CM noise generation steps in a conventional wireless transceiver;
FIG. 2 is a block diagram illustrating a wireless transceiver according to a first embodiment of the present invention;
FIG. 3 is a circuit diagram of a band stop filter according to an embodiment of the present invention;
FIG. 4 illustrates an example of removing a transmission frequency band signal by means of a band stop filter according to an embodiment of the present invention; and
FIG. 5 is a block diagram illustrating a wireless transceiver according to a second embodiment of the present invention.

Hereinafter, preferred embodiments of the present invention will be described with reference to the accompanying drawings. In the following description of the embodiments of the present invention, a detailed description of known functions and configurations incorporated herein will be omitted when it may obscure the subject matter of the present invention.

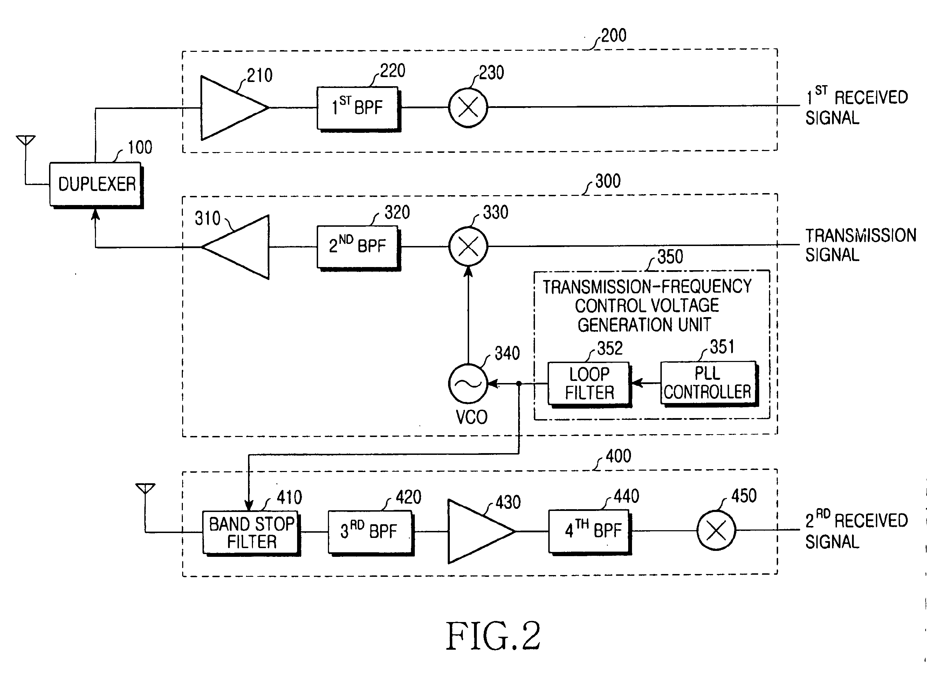

FIG. 2 is a block diagram illustrating a wireless transceiver for transmitting/receiving a single-frequency band signal. The wireless transceiver shown in this drawing has a dual-receiver structure, which includes a main receiver and a sub-receiver (diversity receiver) to individually receive a single-frequency band signal. The wireless transceiver includes a duplexer 100, a first receiver 200, a transmitter 300, and a second receiver 400.

The duplexer 100 is connected to an antenna, the first receiver 200, and transmitter 300, and outputs a transmission signal output from the transmitter 300 through the antenna. Also, the duplexer 100 provides a frequency band signal corresponding to a received signal, from among signals received through the antenna, to the first receiver 200.

The first receiver 200, which is a main receiver, includes a first low noise amplifier 210, a first band pass filter (BPF) 220, and a first mixer 230. The first low noise amplifier 210 amplifies a received signal provided from the duplexer 100. The first BPF 220 performs a band pass filtering operation with respect to the low-noise amplified signal, in order to remove a noise signal and to pass only an actually-received signal. The first mixer 230 down-converts the received signal, having undergone the band pass filtering, to output the down-converted signal as a first received signal of a baseband.

The transmitter 300 includes a power amplifier 310, a second BPF 320, a second mixer 330, a voltage controlled oscillator (VCO) 340, and a transmission-frequency control voltage generation unit 350.

The transmission-frequency control voltage generation unit 350 may include a PLL controller 351 and a loop filter 352. The PLL controller 351 changes the amount of charge provided to the loop filter 352 in order to tune the oscillation frequency of the VCO 340 to a transmission frequency. The loop filter 352 provides the VCO 340 with a transmission frequency control voltage, based on a change in the amount of charge accumulated by a capacitor.

The VCO 340 oscillates a transmission frequency corresponding to the transmission frequency control voltage input from the loop filter 352. The second mixer 330 mixes a transmission signal of a baseband with the transmission frequency oscillated by the VCO 340, thereby up-converting the transmission signal into a transmission frequency band signal.

The second BPF 320 receives an output signal of the second mixer 330, and performs a band pass filtering operation with respect to the output signal, so as to pass only the transmission frequency band signal.

The power amplifier 310 receives the transmission frequency band signal from the second BPF 320, and power-amplifies and transmits the received transmission frequency band signal to the duplexer 100. The duplexer 100 outputs the transmission frequency band signal, which has been received from the power amplifier 310, through the antenna.

The second receiver 400 is a sub-receiver, which receives a sub-signal through a separate sub-antenna. The sub-receiver may be configured with a diversity receiver to receive a diversity signal. The second receiver 400 includes a band stop filter 410, a third BPF 420, a second low noise amplifier 430, and a fourth BPF 440.

The band stop filter 410 performs a band stop filtering operation with respect to a signal received through the sub-antenna, in order to prevent a signal having a transmission frequency band from passing therethrough. The band stop filter 410 precisely and sufficiently prevents the signal having the transmission frequency band from passing therethrough, by controlling its own attenuation pole to be the same as the transmission frequency band, based on the transmission frequency control voltage output from the loop filter 352. The third BPF 420 performs a band pass filtering operation of passing only an actually-received signal, in order to remove a noise signal remaining in the received signal from which the signal having the transmission frequency band has been removed.

The second low noise amplifier 430 receives and low-noise amplifies an actually-received signal, from which the signal of the transmission frequency band and the noise signal have been removed by the band stop filter 410 and the third BPF 420.

The fourth BPF 440 performs a band pass filtering operation of passing only an actually-received signal, in order to remove a noise signal (such as an image signal) except for the actually-received signal, from among the signals low-noise-amplified by the second low noise amplifier 430.

A third mixer 450 down-converts the received signal band which has undergone the band pass filtering operation by the fourth BPF 440, thereby outputting a second received signal of a baseband. As described above, according to the wireless transceiver based on the first embodiment of the present invention, the band stop filter 410 is connected to the receiver, and a transmission frequency control voltage for oscillating a frequency corresponding to a transmission frequency band is applied to the band stop filter 410. Then, the band stop filter 410 prevents a signal having the transmission frequency band from passing therethrough, by controlling its own attenuation pole to accord with the transmission frequency band, based on a transmission frequency control voltage for oscillating the frequency corresponding to the transmission frequency band.

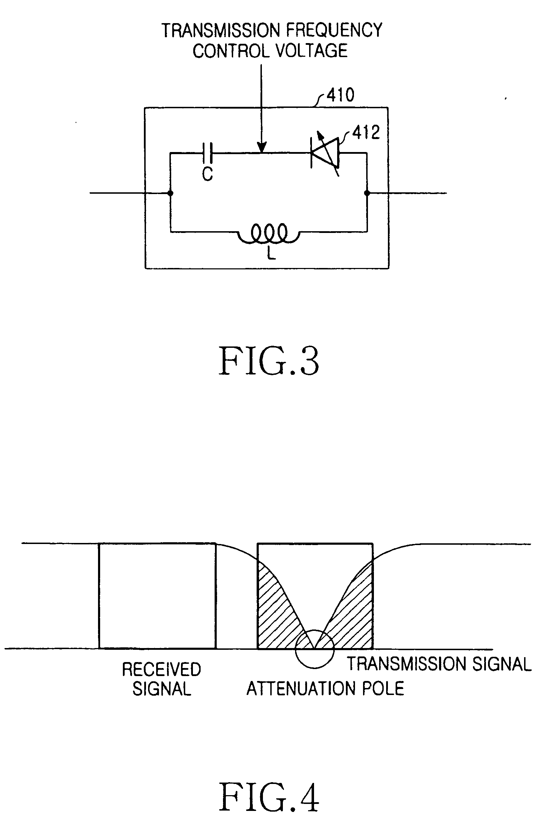

FIG. 3 is a circuit diagram of the band stop filter 410 according to an embodiment of the present invention. The band stop filter 410 includes capacitor (C), and variable capacitance diode (which is called "varactor") 412, and inductor (L). The capacitor (C) and the varactor 412 are connected to each other in series, and have capacitance components, respectively. The capacitance component of the capacitor (C) has a fixed value, while the value of the capacitance component of the varactor 412 changes depending on the voltage applied between both ends thereof. The inductor (L) is connected in parallel to the capacitor (C) and varactor 412, which are connected to each other in series, and has an inductance component. The attenuation pole of such a band stop filter changes depending on the values of the capacitance and inductance. According to the present invention, the attenuation pole of the band stop filter 410 is controlled to accord with a transmission frequency band, by changing the voltage applied between both ends of the varactor 412 by means of a transmission frequency control voltage. Accordingly, the wireless transceiver of the present invention can precisely and sufficiently remove a transmission signal included in a received signal by using the band stop filter 410.

FIG. 4 is a view illustrating an example of removing a transmission frequency band signal by means of a band stop filter according to an embodiment of the present invention. Referring to FIG. 4, the attenuation pole of the band stop filter 410 according to the present invention moves to accord with a transmission frequency band based on a transmission frequency control voltage for oscillating a transmission frequency, thereby precisely preventing a signal having the transmission frequency band included in a received signal from passing therethrough. Therefore, the receiver of the wireless transceiver according to the present invention can prevent the occurrence of CM noise due to the transmission signal.

Although the first embodiment of the present invention has been described with respect to a wireless transceiver for transmitting/receiving signals of a signal frequency band, the present invention may be applied to a wireless transceiver apparatus for transmitting/receiving signals of a plurality of different frequency bands.

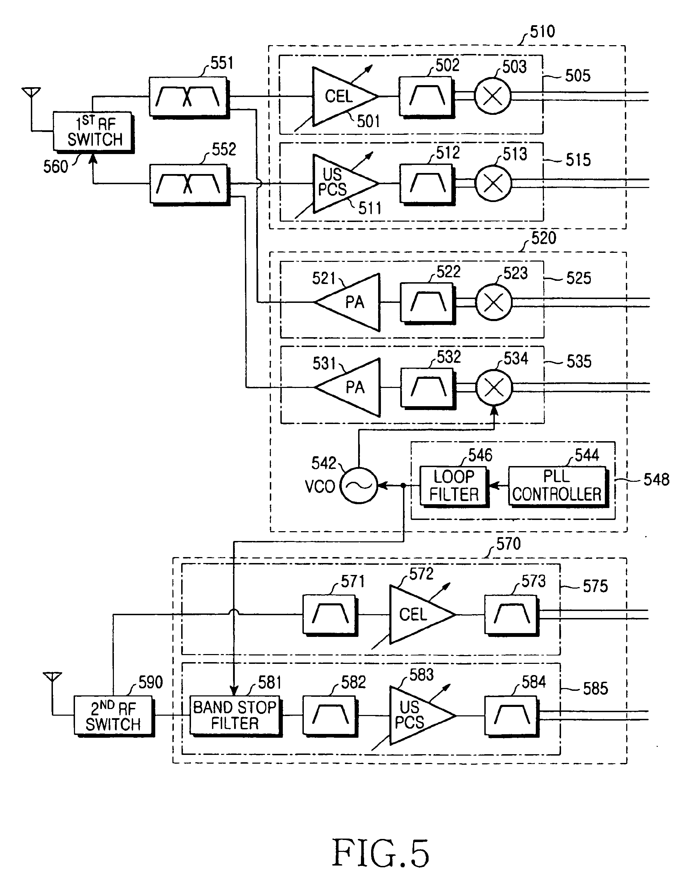

FIG. 5 is a block diagram illustrating the construction of a wireless transceiver according to a second embodiment of the present invention. That is, FIG. 5 shows a wireless transceiver which transmits/receives signals of two different frequency bands, i.e., a cellular band and a United States Personal Communication Service (US PCS) band. The wireless transceiver according to the second embodiment of the present invention includes a first receiver 510, a transmitter 520, a first duplexer 551, a second duplexer 552, a first RF switch 560, a second receiver 570, and a second RF switch 590.

The first receiver 510, which is a main receiver, includes a cellular receiver 505 for receiving and processing signals of a cellular band, and a US PCS receiver 515 for receiving and processing signals of a US PCS band. The cellular receiver 505 converts a received signal of the cellular band into a first baseband signal and outputs the first baseband signal. The cellular receiver 505 includes a low noise amplifier 501, a BPF 502, and a mixer 503. The low noise amplifier 501 low-noise amplifies a received signal of the cellular band provided through the first duplexer 551. The BPF 502 performs a band-pass filtering operation in order to allow only an actually-received signal of the low-noise amplified signals to pass therethrough while preventing noise from passing therethrough. The mixer 503 down-converts the received signal of the cellular band, from which noise has been removed through the BPF 502, into a first baseband signal, and then outputs the first baseband signal.

The US PCS receiver 515 converts a received signal of the US PCS band into a second baseband signal and outputs the second baseband signal. The US PCS receiver 515 includes a low noise amplifier 511, a BPF 512, and a mixer 513.

The low noise amplifier 511 low-noise amplifies a received signal of the US PCS band provided through the second duplexer 552. The BPF 512 performs a band-pass filtering operation in order to allow only an actually-received signal having the US PCS band of the low-noise amplified signal to pass therethrough, while preventing noise from passing therethrough. The mixer 513 down-converts the received signal of the US PCS band, from which noise has been removed through the BPF 512, into a second baseband signal, and then outputs the second baseband signal.

The transmitter 520 includes a cellular transmitter 525 for transmitting signals of the cellular band, a US PCS transmitter 535 for transmitting signals of the US PCS band, a VCO 542, and a transmission-frequency control voltage generation unit 548. The VCO 542 oscillates a transmission frequency based on a transmission frequency control voltage. The transmission-frequency control voltage generation unit 548 generates a control voltage for controlling the VCO 542 such that the VCO 542 generates an oscillation frequency identical to a desired transmission frequency. The transmission-frequency control voltage generation unit 548 includes a PLL controller 544 and a loop filter 546. The PLL controller 544 changes the amount of charge provided to the loop filter 546 in order to tune a VOC oscillation frequency to a transmission frequency of the US PCS band. The loop filter 546 outputs a transmission frequency control voltage of the US PCS band, based on a change in the amount of charge accumulated by a capacitor. According to this embodiment of the present invention, a transmission frequency control voltage of the US PCS band is applied to the VCO 542 so that the VCO 542 can control its oscillation frequency to be identical to a transmission frequency of the US PCS band. Also, the transmission frequency control voltage of the US PCS band is applied to a band stop filter 581 of a US PCS diversity receiver 585 so that the attenuation pole of the band stop filter 581 moves to be the same as a US PCS transmission frequency.

The cellular transmitter 525 converts a signal having the baseband signal to be transmitted into a transmission signal of the cellular band, and output the transmission signal of the cellular band. The cellular transmitter 525 includes a power amplifier 521, a BPF 522, and a mixer 523. The mixer 523 mixes the transmission signal of the baseband signal to be transmitted with a transmission frequency of the cellular band, thereby up-converting the transmission signal of the baseband signal into the transmission signal of the cellular band. The BPF 522 receives an output signal of the mixer 523, and performs a band pass filtering operation with respect to the received signal, in order to allow only the transmission signal having the cellular band to pass therethrough while preventing noise from passing therethrough. The power amplifier 521 power-amplifies and outputs the transmission signal of the cellular band, which has undergone the band pass filtering operation through the BPF 522.

The US PCS transmitter 535 converts a signal having the baseband signal to be transmitted into a transmission signal of the US PCS band, and output the transmission signal of the US PCS band. The US PCS transmitter 535 includes a power amplifier 531, a BPF 532, and a mixer 533. The mixer 533 mixes the transmission signal of the baseband signal to be transmitted with a transmission frequency of the US PCS band, thereby up-converting the transmission signal of the baseband signal into the transmission signal of the US PCS band. The BPF 532 receives an output signal of the mixer 533, and performs a band pass filtering operation with respect to the received signal, in order to allow only the transmission signal of the US PCS band to pass therethrough, while preventing noise from passing therethrough. The power amplifier 531 power-amplifies and outputs the transmission signal of the US PCS band, which has undergone the band pass filtering operation through the BPF 532.

The first duplexer 551 is connected to the main antenna, the cellular receiver 505, and the cellular transmitter 525, and outputs a transmission signal output from the cellular transmitter 525 to the main antenna. Also, the first duplexer 551 provides the cellular receiver 505 with a received signal having the cellular band from among signals received through the main antenna. The second duplexer 552 is connected to the main antenna, the US PCS receiver 515, and the US PCS transmitter 535, and outputs a transmission signal output from the US PCS transmitter 535 to the main antenna. Also, the second duplexer 552 provides the US PCS receiver 515 with a signal having the US PCS band from among signals received through the main antenna.

The first RF switch 560 performs a switching operation to connect the main antenna to either the first duplexer 551 or the second duplexer 552.

The second receiver 570 is a sub-receiver, which receives diversity signals of each band (cellular band and US PCS band) through a separate sub-antenna and processes the received signals. The second receiver 570 may include a cellular diversity receiver 575 for receiving a diversity signal of the cellular band, and a US PCS diversity receiver 585 for receiving a diversity signal of the US PCS band. The second RF switch 590 performs a switching operation to connect the sub-antenna to either the cellular diversity receiver 575 or the US PCS diversity receiver 585.

The cellular diversity receiver 575 receives and processes a received diversity signal of the cellular band provided from the second RF switch 590. A surface acoustic wave (SAW) filter, which is a band pass filter using a surface acoustic wave, has an excellent performance since the SAW filter has a narrow passband. In the case of cellular signals, where the interval between a received signal and a transmission signal is not so narrow, the cellular diversity receiver 575 can almost remove a transmission signal included in a received signal, by using a SAW filter.

Therefore, the cellular diversity receiver 575 includes a SAW filter 571, a low noise amplifier 572, and a BPF 573. The SAW filter 571 passes only a received diversity signal having the cellular band from among signals received through the sub-antenna, thereby removing a transmission signal included in the received signal. The low noise amplifier 572 receives and low-noise amplifies the received signal, from which the transmission signal has been removed by the SAW filter 571. The BPF 573 performs a band pass filtering operation with respect to the low-noise amplified signal in order to allow only an actually-received signal having of the low-noise amplified signal to pass therethrough, while preventing noise from passing therethrough.

Meanwhile, the US PCS diversity receiver 585 receives and processes a received diversity signal of the US PCS band. Signals of the US PCS band have a wide passband of 60 MHz, and the frequency interval between a transmission signal and a received signal of the US PCS band is very narrow. Therefore, although the SAW filter having excellent performance is used to process signals of the US PCS band, it is difficult to sufficiently remove a transmission signal included in a received signal. Accordingly, a method capable of more sufficiently removing a transmission signal included in a received signal is required. To this end, according to an embodiment of the present invention, the band stop filter 581 is connected in the US PCS diversity receiver 585, so that a transmission signal included in a received signal can be first removed through the band stop filter 581, and then the received signal, from which the transmission signal has been removed, can be provided to the SAW filter 582.

According to the present invention, the US PCS diversity receiver 585 may include a band stop filter 581, a SAW filter 582, a low noise amplifier 583, and a BPF 584. The band stop filter 581 performs a band stop filtering operation with respect to a signal received through the sub-antenna, so as to prevent a transmission signal having the US PCS band from passing through the band stop filter 581. The band stop filter 581 controls its own attenuation pole to accord with a transmission frequency of the US PCS band, based on a VCO control voltage output from the loop filter 546, thereby removing signals of the US PCS transmission frequency band. The SAW filter 582 receives a received signal, from which a transmission frequency signal has been removed by the band stop filter 581, and passes only a received diversity signal of the US PCS band, thereby once more removing the transmission signal and noise included in the received signal. The low noise amplifier 583 receives and low-noise amplifies the received signal filtered by the SAW filter 582. The BPF 584 performs a band pass filtering operation with respect to the low-noise amplified signal in order to allow only an actually-received signal having the US PCS band of the low-noise amplified signal to pass therethrough, while preventing noise from passing therethrough.

As described above, according to the wireless transceiver based on the second embodiment of the present invention, a band stop filter 581 is connected to a receiver for receiving signals of the US PCS band in a sub-receiver, and a VCO control voltage for oscillating a transmission frequency corresponding to the US PCS band is applied to the band stop filter 581. The band stop filter 581 controls its own attenuation pole to accord with a transmission frequency band, based on a VCO control voltage for oscillating a transmission frequency of the US PCS band, thereby preventing a US PCS transmission frequency band's signal of a received signal from passing through the band stop filter 581. Accordingly, the wireless transceiver of the second embodiment of the present invention can prevent the occurrence of CM noise resulting from a transmission signal included in a received signal.

That is, the noise removing apparatus according to the present invention can precisely and sufficiently remove a transmission signal included in a received signal by using the band stop filter. In addition, the wireless transceiver having the noise removing apparatus can prevent the occurrence of CM noise resulting from a transmission signal included in a received signal, by sufficiently removing the transmission signal included in the received signal.

While the present invention has been shown and described with reference to certain preferred embodiments thereof, it will be understood by those skilled in the art that various changes in form and details may be made therein without departing from the scope of the invention as defined by the appended claims. Particularly, although an embodiment of the present invention is described with respect to the case in which a band stop filter is used in a wireless transceiver having a dual receiver structure, the band stop filter according to the present invention may be also applied to a wireless transceiver having a single receiver structure, so the present invention is not limited to being a wireless transceiver having a specific structure. Accordingly, the scope of the invention is not to be limited by the above embodiments but by the claims.

## Claims

1. A wireless transceiver apparatus comprising
a transmitter (300), whose transmit frequency is controlled using a transmission frequency control voltage generation unit (350) generating a transmission frequency control voltage applied to a voltage controlled oscillator (340);
a first receiver (200), wherein the output of the transmitter and the input of the first receiver is connected via a duplexer (100) to a first antenna; and
a second receiver (400) having a band stop filter (410) connected to a second antenna, wherein an attenuation pole of the band stop filter is controlled by applying the transmission frequency control voltage generated by the transmission frequency control voltage generation unit (350) of the transmitter.

2. The apparatus as claimed in claim 1, wherein the band stop filter (410) includes a varactor (412), in which a capacitance component of the varactor changes depending on the transmission frequency control voltage so that the attenuation pole accords with the transmission frequency of the transmitter.

3. The apparatus as claimed in claim 1 or 2, wherein the transmission-frequency control voltage generation unit (350) comprises:
a PLL controller (351) for providing charge amount for controlling a transmission frequency of a voltage-controlled oscillator, which oscillates the transmission frequency; and
a loop filter (352) for outputting the transmission-frequency control voltage based on a change in the amount of charge provided by the PLL controller.

4. The apparatus as claimed in one of claims 1 to 3, wherein the transmission frequency band and the reception frequency band corresponds to a US PCS band.

5. A method for operating a wireless transceiver apparatus according to one of claims 1 to 4.

## Patentansprüche

1. Drahtlose Sende-/Empfangseinrichtung, umfassend
einen Sender (300), dessen Sendefrequenz durch Verwendung einer Baugruppe (350) zur Erzeugung einer Sendefrequenzsteuerspannung gesteuert wird, die eine Sendefrequenzsteuerspannung erzeugt, die an einen spannungsgesteuerten Schwingkreis (340) angelegt wird;
einen ersten Empfänger (200), wobei der Ausgang des Senders und der Eingang des ersten Empfängers über eine Sende-/Empfangsweiche (100) mit einer ersten Antenne verbunden ist; und
einen zweiten Empfänger (400), der einen Bandsperrenfilter (410) enthält, welcher mit einer zweiten Antenne verbunden ist, wobei ein Dämpfungspol des Bandsperrenfilters gesteuert wird durch Anlegen der Sendefrequenzsteuerspannung, die durch die Baugruppe zur Erzeugung der Sendefrequenzsteuerspannung (350) des Senders erzeugt wird.

2. Vorrichtung nach Anspruch 1, wobei der Bandsperrenfilter (410) eine Kapazitätsdiode (412) beinhaltet, in welcher ein kapazitives Element der Kapazitätsdiode sich ändert, abhängig von der Sendefrequenzsteuerspannung so, dass der Dämpfungspol mit der Senderfrequenz des Senders übereinstimmt.

3. Vorrichtung nach einem der Ansprüche 1 oder 2, wobei die Baugruppe (350) zur Erzeugung der Sendefrequenzsteuerspannung umfasst:
einen PLL-Regler (351), der eine Ladungsmenge zur Steuerung einer Sendefrequenz eines spannungsgesteuerten Schwingkreises, welcher die Sendefrequenz in Schwingung versetzt, bereitstellt; und
einen Schleifenfilter (352) zur Ausgabe der Sendefrequenzsteuerspannung, basierend auf der Änderung der Ladungsmenge, die vom PLL-Regler bereitgestellt wird.

4. Vorrichtung nach einem der Ansprüche 1 bis 3, wobei das Sendefrequenzband und das Empfangsfrequenzband dem US PCS-Band entspricht.

5. Verfahren zum Betreiben einer drahtlosen Sende-/Empfangseinrichtung gemäß einem der Ansprüche 1 bis 4.

## Revendications

1. Appareil à émetteur-récepteur sans fil comportant
un émetteur (300), dont la fréquence d'émission est commandée en utilisant une unité (350) de génération de tension de commande de fréquence d'émission générant une tension de commande de fréquence d'émission appliquée à un oscillateur (340) commandé en tension ;
un premier récepteur (200), la sortie de l'émetteur et l'entrée du premier récepteur étant connectées par l'intermédiaire d'un duplexeur (100) à une première antenne ; et
un second récepteur (400) ayant un filtre coupe-bande (410) connecté à une seconde antenne, dans lequel un pôle d'atténuation du filtre coupe-bande est commandé par l'application de la tension de commande de fréquence d'émission générée par l'unité (350) de génération de tension de commande de fréquence d'émission de l'émetteur.

2. Appareil selon la revendication 1, dans lequel le filtre coupe-bande (410) comprend une diode varicap (412), dans lequel une composante de capacité de la diode varicap varie suivant la tension de commande de fréquence d'émission de manière que le pôle d'atténuation s'accorde avec la fréquence d'émission de l'émetteur.

3. Appareil selon la revendication 1 ou 2, dans lequel l'unité (350) de génération de tension de commande de fréquence d'émission comporte :
un dispositif de commande (351) à boucle à phase asservie, PLL, destiné à produire une quantité de charge pour commander une fréquence d'émission d'un oscillateur commandé en tension, qui fait osciller la fréquence d'émission ; et
un filtre de boucle (352) destiné à délivrer en sortie la tension de commande de fréquence d'émission basée sur une variation de la quantité de charge produite par le dispositif de commande PLL.

4. Appareil selon l'une des revendications 1 à 3, dans lequel la bande de fréquence d'émission et la bande de fréquence de réception correspondent à une bande US PCS.

5. Procédé pour faire fonctionner un appareil à émetteur-récepteur sans fil selon l'une des revendications 1 à 4.
